# FASCICULE DE BREVET EUROPEEN

(11) **EP 2 078 152 B1**
(45) Date de publication et mention de la délivrance du brevet: **30.12.2009**
(21) Numéro de dépôt: 07848214.8
(22) Date de dépôt: 11.09.2007
(51) Int. Cl.: F02K 1/72

(54) **INVERSEUR DE POUSSÉE À GRILLES POUR MOTEUR À RÉACTION**
KASKADENARTIGER SCHUBUMKEHRER FÜR EIN TRIEBWERK
CASCADE-TYPE THRUST REVERSER FOR JET ENGINE

(30) Priorité: 11.10.2006 FR 0608891
(43) Date de publication de la demande: 15.07.2009
(73) Titulaire: Aircelle, 76700 Gonfreville L'Orcher (FR)
(72) Inventeur: VAUCHEL, Guy, Bernard, 76610 Le Havre (FR)
(74) Mandataire: Jouanneau, Lionel
(86) Numéro de dépôt international: PCT/FR2007/001459
(87) Numéro de publication internationale: WO 2008/043890

(56) Documents cités:
- FR-A- 2 132 380
- FR-A1- 2 405 366
- US-A- 3 608 314
- US-A1- 2001 010 148
- US-A1- 2003 056 493

## Description

La présente invention concerne les inverseurs de poussée à grilles (ou à cascades) pour moteur à réaction, et plus particulièrement les inverseurs à grilles dits naturels.

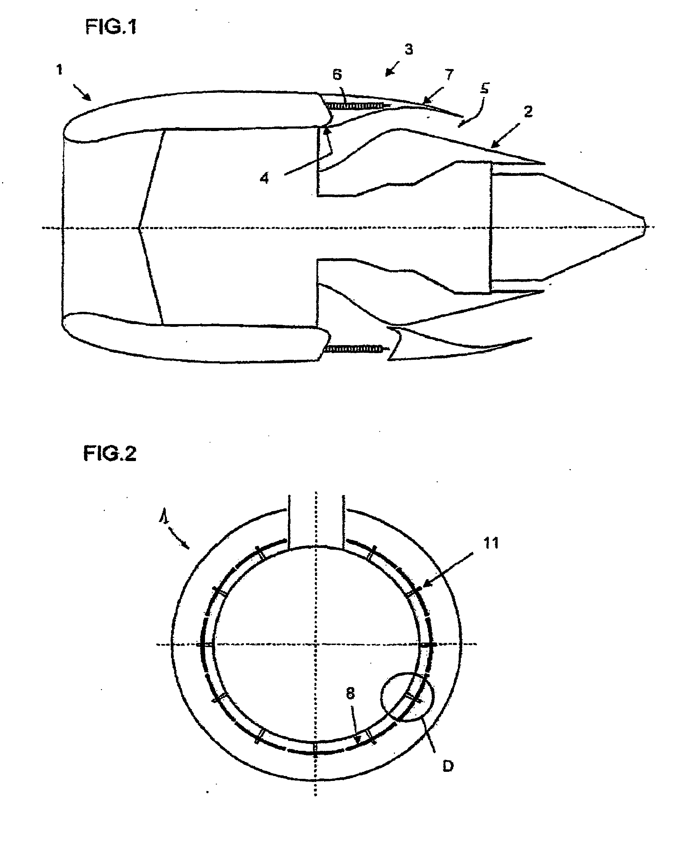

Comme illustré sur la figure 1 du dessin en annexe, un tel inverseur de poussée 3 à grilles, dit naturel, comprend généralement un capotage 1 dans lequel est ménagée une ouverture équipée de grilles 6 (ou cascades) qui, en situation de poussée directe des gaz, est fermée par un capot coulissant 7 (voir la moitié supérieure de la figure 1) et qui, en situation d'inversion de poussée, est dégagée par déplacement en translation vers l'aval (par référence au sens d'écoulement des gaz) du capot coulissant 7 (voir la moitié inférieure de la figure 1).

Un canal de soufflante 5 est défini entre une peau intérieure 2 (un capot entourant le moteur) et une peau extérieure dans laquelle s'intègre la peau intérieure du capot coulissant 7 en situation de poussée directe.

La peau intérieure du capot coulissant 7 comporte une partie annulaire s'étendant radialement vers l'intérieur et susceptible, en situation d'inversion de poussée, de venir en butée contre une partie annulaire de plus grand diamètre (formant une bosse) de la peau intérieure 2 du canal de soufflante, afin de bloquer sensiblement, de manière "naturelle", le flux froid qui circule dans le canal de soufflante 5 en vue de le dévier vers l'avant au travers de l'ouverture à grilles 6.

Pour plus de détails sur ce type d'inverseurs, on peut se reporter aux documents de brevet FR 2 132 380 et US 4 232 516. Le document US 3 608 314 décrit un inverseur de poussée ayant les caractéristiques du préambule de la revendication 1.

La "bosse" annulaire du capot 2 entourant le moteur oblige à avoir des lignes aérodynamiques de nacelle importantes en diamètre, alors que les avionneurs privilégient des trains d'atterrissage de plus en plus courts ce qui nécessite de réduire le diamètre des nacelles sous aile.

En outre, les lignes aérodynamiques de nacelle ne peuvent parfois pas procurer à la bosse annulaire du capot 2 un emplacement suffisamment proche de l'amont de la structure fixe 4 de l'inverseur (pour tenir compte du fait que la course maximale de recul du capot coulissant 7 est relativement limitée. Il en ressort que le capot coulissant 7 doit reculer loin, souvent au-delà de la longueur des grilles 6 qui est elle limitée par les lignes fines du capot coulissant 7 en situation de poussée directe.

Enfin, les lignes aérodynamiques en partie aval du capot coulissant 7 sont souvent très resserrées afin de ne pas trop entamer le volume radial de la nacelle, et ne permettent pas d'inclure des structures en "sandwich" permettant une atténuation acoustique optimale.

La présente invention a pour but d'éviter ces inconvénients en proposant un inverseur de poussée du type précité, dans lequel les lignes aérodynamiques de la peau intérieure du canal de soufflante se rapprochent de celles connues pour les inverseurs de poussée à grilles dits "classiques", afin de permettre l'emploi d'enveloppes de nacelle compatibles avec les besoins des constructeurs.

A cet effet, l'invention a pour objet un inverseur de poussée à grilles pour moteur à réaction, comprenant un capotage dans lequel est ménagée une ouverture qui, en situation de poussée directe des gaz, est fermée par un capot coulissant et qui, en situation d'inversion de poussée, est dégagée par déplacement en translation vers l'aval (par référence au sens d'écoulement des gaz) du capot coulissant, un canal de soufflante étant défini entre une peau intérieure et une peau extérieure dans laquelle s'intègre la peau intérieure du capot coulissant en situation de poussée directe, la peau intérieure du capot coulissant comportant une partie annulaire s'étendant radialement vers l'intérieur et susceptible, en situation d'inversion de poussée, de venir en regard d'une partie annulaire de plus grand diamètre de la peau intérieure du canal de soufflante, et dans lequel ladite partie annulaire de la peau intérieure du capot coulissant comporte au moins un volet monté pivotant autour d'un axe sensiblement médian d'articulation, entre une position rétractée dans la peau intérieure du capot coulissant et une position déployée dans laquelle une partie avant du volet, en amont de son axe médian d'articulation, fait saillie dans le canal de soufflante, et des moyens d'arrêt en translation sont prévus pour, en situation d'inversion de poussée, agir sur une partie arrière du volet, en aval de son axe médian d'articulation, de manière à faire pivoter le volet en position déployée pour obturer le canal de soufflante.

Grâce à ces dispositions, les lignes aérodynamiques de la peau intérieure du canal de soufflante sont adoucies par une réduction en taille de sa "bosse" annulaire, cette réduction étant compensée par l'emploi, en situation d'inversion de poussée, de petits volets se déployant afin d'obturer le canal de soufflante sous l'action de moyens d'arrêt en translation sur une partie arrière du volet en aval de son axe médian d'articulation.

Des moyens mécaniques ou élastiques peuvent être avantageusement prévus pour, en situation de poussée directe, rappeler le volet en position rétractée.

Dans une forme de réalisation, la partie annulaire de plus grand diamètre de la peau intérieure du canal de soufflante comporte un organe de butée, de préférence de forme aérodynamique, et apte, en situation d'inversion de poussée, à venir buter contre la partie arrière du volet et à faire basculer ce dernier en position déployée.

L'organe de butée présente avantageusement une surface de contact glissant ou roulant avec la partie arrière du volet, afin de réduire ou d'éliminer les frottements.

L'organe de butée peut aussi présenter une ouverture formant, selon son orientation vers l'amont ou vers l'aval, une entrée d'air de refroidissement du moteur ou une sortie d'air du moteur.

Selon une possibilité avantageuse, le capotage possède un élément de butée pour, en situation de poussée directe, faire obstacle au mouvement de la partie arrière du volet et immobiliser le volet en position rétractée. Cet élément de butée présente avantageusement une surface de contact glissant ou roulant avec la partie arrière du volet afin de réduire ou d'éliminer les frottements.

Dans une autre forme de réalisation, la partie arrière du volet est articulée à une première extrémité d'au moins une bielle dont une seconde extrémité est montée coulissante d'amont vers l'aval dans une glissière qui présente une extrémité aval d'arrêt en translation prévue pour, durant l'inversion de poussée, immobiliser la seconde extrémité de la bielle de sorte que, en fin de course du capot coulissant vers l'aval, le volet bascule en position déployée.

Dans encore une autre forme de réalisation, la partie arrière du volet est articulée à une première extrémité d'au moins une bielle à coulisseau télescopique articulée par une seconde extrémité sur une structure fixe en amont de l'inverseur, et la longueur en extension maximale de ladite bielle à coulisseau est déterminée de sorte que, en fin de course du capot coulissant vers l'aval, le volet bascule en position déployée.

Ces deux dernières formes de réalisation présentent l'avantage de ne pas présenter d'obstacle (organe de butée) dans le canal de soufflante en situation de poussée directe.

Selon une variante de réalisation, la bielle est montée articulée autour d'un point fixe situé en aval des grilles.

Selon encore un autre mode de réalisation de l'invention, la partie arrière (8b) du volet (8) présente un élément de pivotement apte à coopérer lors de la translation du capot mobile avec une rampe montée fixe sur un cadre arrière (17) des grilles (6) de manière à provoquer le basculement dudit volet lors du recul du capot mobile.

L'invention a également pour objet une nacelle de moteur à réaction comprenant un inverseur de poussée à grilles naturel tel que défini ci-dessus.

De toutes façons, l'invention sera mieux comprise, et d'autres caractéristiques apparaîtront, à la lecture de la description détaillée ci-après faite à titre illustratif et non exhaustif en référence aux dessins annexés dans lesquels:
- la figure 1 (déjà commentée) est une vue schématique en coupe longitudinale d'un inverseur de poussée à grilles "naturel" de type connu;
- la figure 2 est une vue en coupe transversale d'un inverseur de poussée selon une première forme de réalisation de l'invention;
- la figure 3 est une vue schématique en perspective d'un composant de détail de la figure 2, à savoir un volet;
- la figure 4 est une vue analogue à la figure 1 de l'inverseur de la figure 2 en situation de poussée directe;
- la figure 5 est une vue analogue à la figure 4 en situation de poussée inversée;
- la figure 6 est une vue schématique en perspective d'un composant de détail des figures 2 à 5, à savoir un organe de butée de volet;
- la figure 7 est une vue analogue à la figure 6 d'une variante de réalisation de la butée de volet;
- la figure 8 est une vue analogue à la moitié supérieure de la figure 4 et illustrant le comportement de la butée de volet de la figure 7;
- la figure 9 est une vue analogue à la figure 8 représentant une autre variante de réalisation comportant une butée d'immobilisation du volet en position rétractée;
- la figure 10 est une vue analogue aux figures 8 et 9 représentant une autre forme de réalisation de l'invention;
- la figure 11 est une vue analogue à la figure 10 en situation d'inversion de poussée.
- les figures 12 et 13 représentent un autre mode d'entraînement du volet respectivement en position de jet direct et d'inversion de poussée.

Les éléments apparaissant sur les figures 2 à 11 et qui sont analogues à des éléments de la figure 1 sont désignés par les mêmes références numériques que sur la figure 1.

L'inverseur de poussée 3 des figures 2 à 11 se distingue essentiellement de celui représenté sur la figure 1 en ce que le diamètre de la "bosse" annulaire du capot 2 entourant le moteur est sensiblement réduit de sorte que, en situation d'inversion de poussée, elle vient simplement en regard (sans contact) de la partie annulaire, s'étendant radialement vers l'intérieur, de la peau intérieure du capot coulissant 7.

Cette partie annulaire de la peau intérieure du capot coulissant 7 comporte une pluralité de volets basculants 8 répartis sur sa circonférence (voir figure 2). Le nombre, la taille et l'enveloppe des volets 8 sont définis selon les performances recherchées d'inversion.

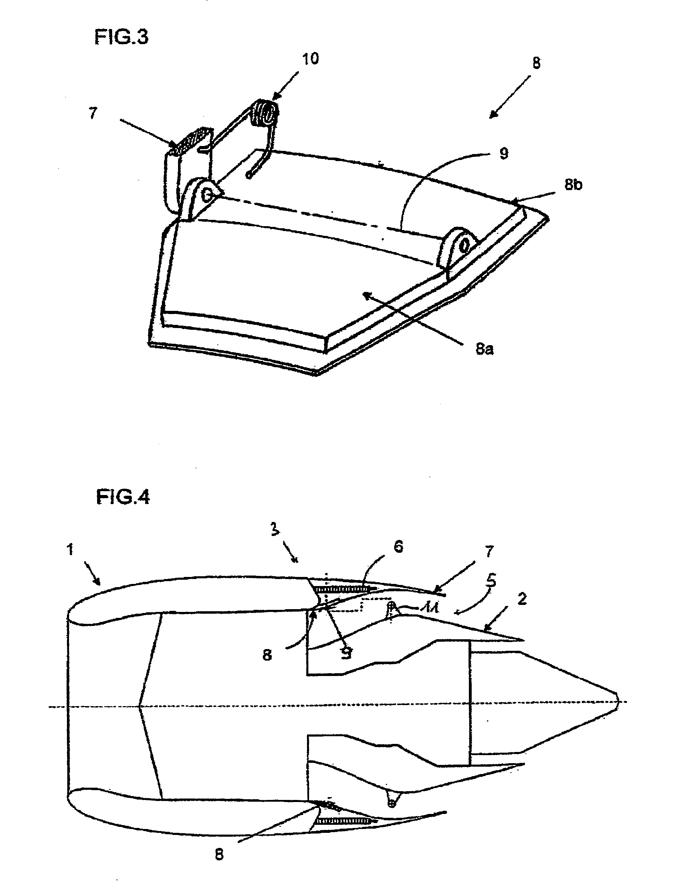

Un exemple de volet 8 est illustré en détail sur la figure 3. Le volet 8 est monté pivotant autour d'un axe médian d'articulation 9, entre une position rétractée dans la peau intérieure du capot coulissant 7 et une position déployée dans laquelle une partie avant 8a du volet 8, située en amont de son axe médian d'articulation 9, fait saillie dans le canal de soufflante 5 en direction de l'axe du moteur.

Le volet 8 est rappelé élastiquement en position rétractée par un système élastique, représenté ici par un ressort de torsion 10 monté autour de l'axe d'articulation 9 du volet 8.

Dans une première forme de réalisation illustrée sur les figures 4 à 8, la bosse annulaire du capot 2 comporte un organe de butée 11 de forme aérodynamique prévu pour, en situation d'inversion de poussée, venir buter contre une partie arrière 8b du volet 8, située en aval de son axe médian d'articulation 9.

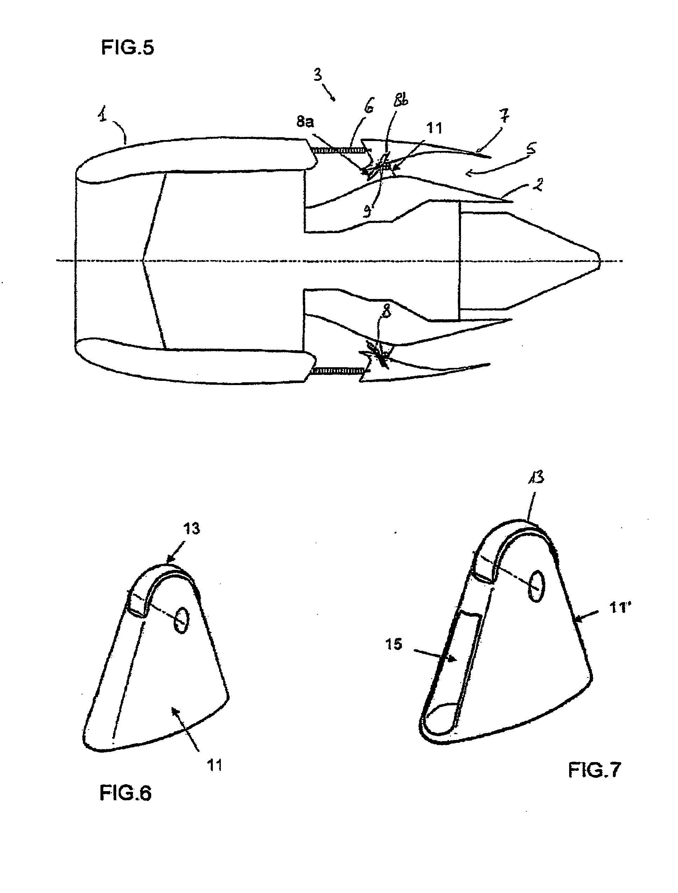

Dès qu'une distance prédéterminée de recul du capot coulissant 7 est atteinte, la partie arrière 8b du volet 8 entre en contact avec l'organe de butée 11. Le recul du capot coulissant 7 se poursuivant, le volet 8 bascule autour de son axe médian 9 jusqu'à une position déployée (voir figure 5) de manière à obturer le canal de soufflante 5.

L'organe de butée 11 est de forme aérodynamique pour minimiser son impact en tant qu'obstacle sur les performances en poussée directe.

L'organe de butée 11 est illustré en détail sur la figure 6. Il présente en partie supérieure une surface de contact roulant 13 avec la partie arrière 8b du volet 8 de manière à éviter les frottements.

La surface de roulement 13 est adaptée pour résister à l'usure et à la déformation engendrées par une utilisation répétée sous des modes vibratoires importants.

Une variante 11' de réalisation de cet organe de butée est illustrée en détail sur la figure 7. L'organe de butée 11' se distingue du précédent en ce qu'il présente une ouverture 15 formant, selon son orientation vers l'amont ou vers l'aval, une entrée d'air de refroidissement du moteur ou une sortie d'air du moteur.

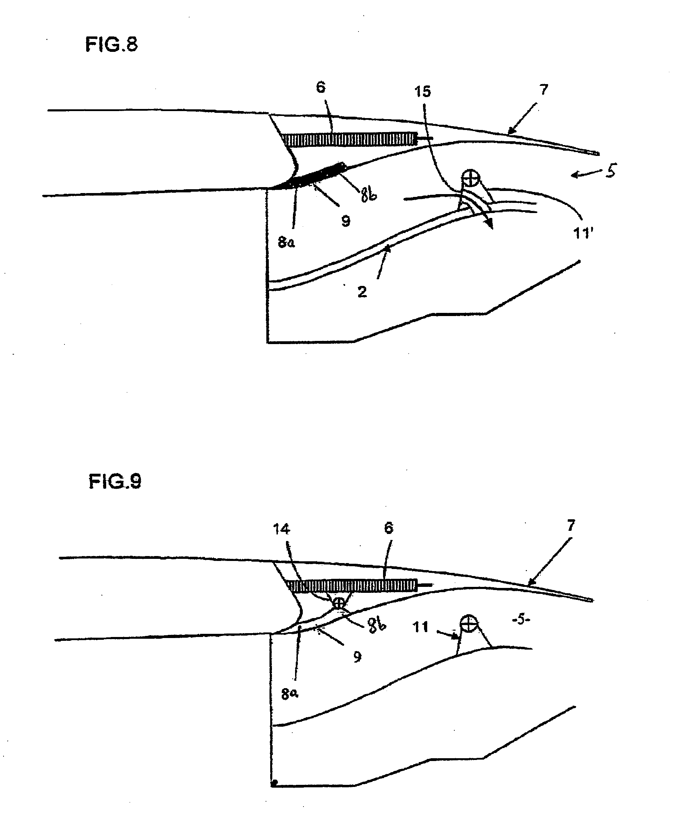

La figure 8 montre le comportement de l'organe de butée 11' en situation de poussée directe, lorsque son ouverture 15 est orientée vers l'amont et qu'elle forme alors une écope d'entrée d'air de refroidissement du moteur.

Il suffit de faire pivoter l'organe de butée 11' de 180° pour orienter l'ouverture 15 vers l'aval et qu'elle forme une sortie d'air du capot 2 du moteur. La vitesse du flux secondaire contournant les formes aérodynamiques de l'organe de butée 11' assiste à l'extraction.

L'inverseur 3 se comporte comme un inverseur naturel "classique" en transit, à savoir que, pendant le recul du capot coulissant 7, la section découverte de l'ouverture du capotage 1 associée à la section de passage en poussée directe n'est jamais inférieure à la section d'entrée d'air en amont de la nacelle.

La figure 9 illustre une autre forme de réalisation dans laquelle le capotage 1 possède un élément de butée 14 prévu pour, en situation de poussée directe, faire obstacle au mouvement de la partie arrière 8b du volet 8 et immobiliser le volet 8 en position rétractée.

Ici, l'élément de butée 14 est installé au niveau des grilles 6 et, en situation de poussée directe, la partie arrière 8b du volet 8 est en contact permanent avec l'élément de butée 14.

L'élément de butée 14 présente aussi une surface de contact roulant avec la partie arrière 8b du volet 8 pour éviter les frottements.

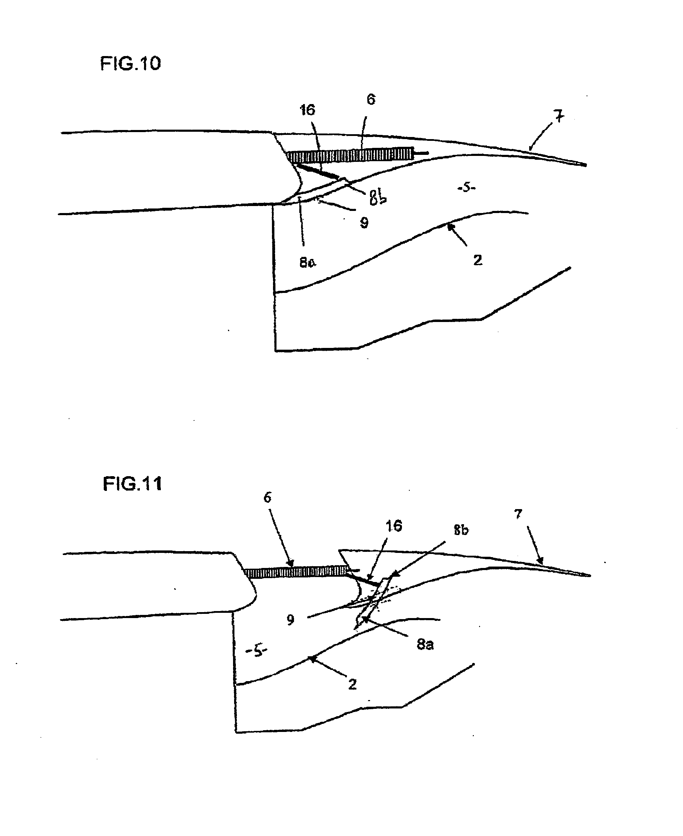

Les figures 10 et 11 illustrent encore une autre forme de réalisation dans laquelle le canal de soufflante 5 ne comporte pas d'obstacle aérodynamique (c'est-à-dire en particulier pas d'organe de butée sur le capot 2 du moteur) en situation de poussée directe.

La partie arrière 8b du volet 8 est articulée à une première extrémité d'une bielle 16. Une seconde extrémité de la bielle 16 est montée coulissante d'amont vers l'aval dans une glissière (non représentée) qui peut faire partie de l'ensemble de grilles 6.

Cette glissière présente une extrémité aval d'arrêt en translation prévue pour, durant l'inversion de poussée, immobiliser la seconde extrémité de la bielle 16 à compter d'une distance prédéterminée de recul atteinte par le capot coulissant 7.

Le capot coulissant 7 poursuivant sa course de recul, la première extrémité de la bielle 16 exerce alors une traction sur la partie arrière 8b du volet 8 qui bascule et atteint la position déployée lorsque le capot coulissant 7 est en fin de course.

Que ce soit en situation de poussée directe ou de poussée inversée, la bielle 16 maintient le volet 8, interdisant tout effet vibratoire par une mise sous contrainte en positions extrêmes du volet 8. Un réglage des moyens de fixation de la bielle 16 peut être associé à l'ensemble.

La bielle 16 peut être montée non pas mobile dans une glissière mais articulée autour d'un point fixe situé en position aval de la grille et faire basculer le volet lors du recul du capot mobile par basculement de la dite bielle autour de son pivot.

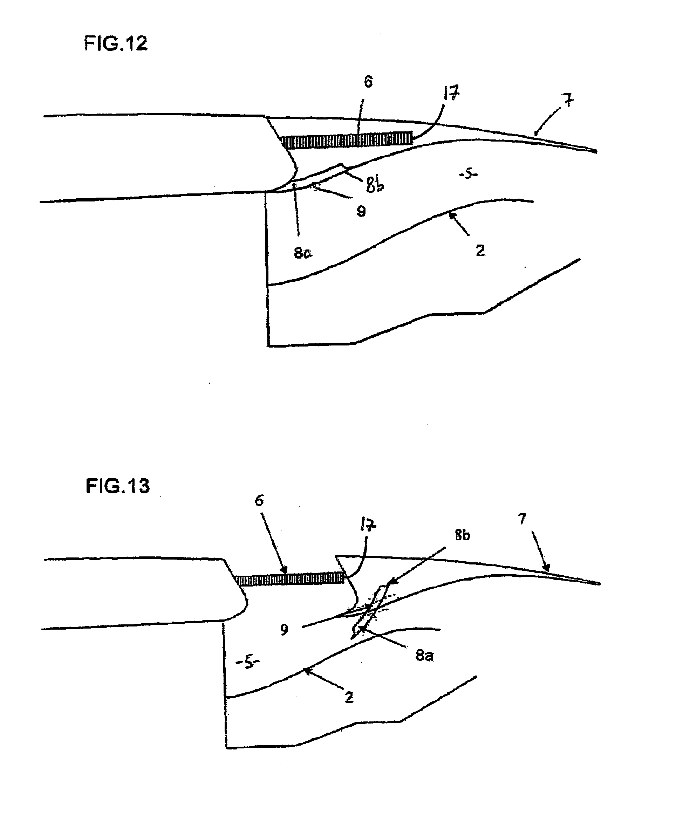

Les figures 12 et 13 montrent un troisième exemple de manoeuvre des volets 8 sans utilisation de butée montée sur le capot entourant le moteur.

Pour ce faire, le cadre arrière de grilles 17 comporte une rampe adaptée, intégrée ou rapportée, qui lors du recul du capot mobile 7 prend en charge un élément de pivotement, associé au volet 8, pouvant supporter un système d'aide au roulement comme un galet. L'association rampe et élément de pivotement permet de présenter un volet, en fin de recul du capot mobile 7, obstruant tout ou une partie de la veine 5 suivant l'efficacité d'inversion recherchée.

L'invention assure ainsi une grande efficacité d'inversion de poussée tout en optimisant l'encombrement externe de la nacelle pour pouvoir la loger sous une aile d'avion.

Bien que l'invention ait été décrite avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Inverseur de poussée (3) à grilles (6) pour moteur à réaction, comprenant un capotage (1) dans lequel est ménagée une ouverture qui, en situation de poussée directe des gaz, est fermée par un capot coulissant (7) et qui, en situation d'inversion de poussée, est dégagée par déplacement en translation vers l'aval, par référence au sens d'écoulement des gaz, du capot coulissant (7), un canal de soufflante (5) étant défini entre une peau intérieure (2) et une peau extérieure dans laquelle s'intègre la peau intérieure du capot coulissant (7) en situation de poussée directe, la peau intérieure du capot coulissant (7) comportant une partie annulaire s'étendant radialement vers l'intérieur et susceptible, en situation d'inversion de poussée, de venir en regard d'une partie annulaire de plus grand diamètre de la peau intérieure (2) du canal de soufflante (5),
**caractérisé en ce que** ladite partie annulaire de la peau intérieure du capot coulissant (7) comporte au moins un volet (8) monté pivotant autour d'un axe sensiblement médian d'articulation (9), entre une position rétractée dans la peau intérieure du capot coulissant (7) et une position déployée dans laquelle une partie avant (8a) du volet (8), en amont de son axe médian d'articulation (9), fait saillie dans le canal de soufflante (5), et **en ce que** des moyens d'arrêt en translation (11; 11'; 16) sont prévus pour, en situation d'inversion de poussée, agir sur une partie arrière (8b) du volet (8), en aval de son axe médian d'articulation (9), de manière à faire pivoter le volet (8) en position déployée pour obturer le canal de soufflante (5).

2. Inverseur de poussée selon la revendication 1, **caractérisé en ce que** des moyens mécaniques ou élastiques (10) sont prévus pour, en situation de poussée directe, rappeler le volet (8) en position rétractée.

3. Inverseur de poussée selon la revendication 1 ou 2, **caractérisé en ce que** la partie annulaire de plus grand diamètre de la peau intérieure (2) du canal de soufflante (5) comporte un organe de butée (11, 11'), de préférence de forme aérodynamique, et apte, en situation d'inversion de poussée, à venir buter contre la partie arrière (8b) du volet (8) et à faire basculer ce dernier en position déployée.

4. Inverseur de poussée selon la revendication 3, **caractérisé en ce que** l'organe de butée (11) présente une surface de contact glissant ou roulant (13) avec la partie arrière (8b) du volet (8).

5. Inverseur de poussée selon la revendication 3 ou 4, **caractérisé en ce que** l'organe de butée (11') présente une ouverture (15) formant, selon son orientation vers l'amont ou vers l'aval, une entrée d'air de refroidissement du moteur ou une sortie d'air du moteur.

6. Inverseur de poussée selon l'une quelconque des revendications 1 à 5, **caractérisé en ce que** le capotage (1) possède un élément de butée (14) prévu pour, en situation de poussée directe, faire obstacle au mouvement de la partie arrière (8b) du volet (8) et immobiliser le volet (8) en position rétractée.

7. Inverseur de poussée selon la revendication 6, **caractérisé en ce que** l'élément de butée (14) présente une surface de contact glissant ou roulant avec la partie arrière (8b) du volet (8).

8. Inverseur de poussée selon la revendication 1 ou 2, **caractérisé en ce que** la partie arrière (8b) du volet (8) est articulée à une première extrémité d'au moins une bielle (16) dont une seconde extrémité est montée coulissante d'amont vers l'aval dans une glissière qui présente une extrémité aval d'arrêt en translation prévue pour, durant l'inversion de poussée, immobiliser la seconde extrémité de la bielle (16) de sorte que, en fin de course du capot coulissant (7) vers l'aval, le volet (8) bascule en position déployée.

9. Inverseur de poussée selon la revendication 1 ou 2, **caractérisé en ce que** la partie arrière (8b) du volet (8) est articulée à une première extrémité d'au moins une bielle à coulisseau télescopique articulée par une seconde extrémité sur une structure fixe (4) en amont de l'inverseur (3), et **en ce que** la longueur en extension maximale de ladite bielle à coulisseau est déterminée de sorte que, en fin de course du capot coulissant (7) vers l'aval, le volet (8) bascule en position déployée.

10. Inverseur de poussée selon la 9, **caractérisé en ce que** la bielle (16) est montée articulée autour d'un point fixe situé en aval des grilles (6).

11. Inverseur de poussée selon la revendication 1 ou 2, **caractérisé en ce que** la partie arrière (8b) du volet (8) présente un élément de pivotement apte à coopérer lors de la translation du capot mobile avec une rampe montée fixe sur un cadre arrière (17) des grilles (6) de manière à provoquer le basculement dudit volet lors du recul du capot mobile.

12. Nacelle de moteur à réaction comprenant un inverseur de poussée à grilles selon l'une quelconque des revendications 1 à 9.

## Claims

1. Cascade-type thrust reverser (3) with cascade vanes (6) for a jet engine, comprising a cowling (1) in which there is formed an opening which, when the gases are in the direct-thrust situation, is closed by a sliding cowl (7) and which, in the thrust-reversal situation, is uncovered by a downstream, with respect to the direction in which the gases flow, translational movement of the sliding cowl (7), a fan duct (5) being defined between an inner skin (2) and an outer skin into which the inner skin of the sliding cowl (7) fits in the direct-thrust situation, the inner skin of the sliding cowl (7) comprising an annular part extending radially inward and able, in the thrust-reversal situation, to come to face a larger-diameter annular part of the inner skin (2) of the fan duct (5),
**characterized in that** said annular part of the inner skin of the sliding cowl (7) comprises at least one flap (8) mounted to pivot about a substantially central axis (9) of articulation, between a position in which it is retracted into the inner skin of the sliding cowl (7) and a deployed position in which a front part (8a) of the flap (8), upstream of its central axis (9) of articulation, projects into the fan duct (5), and **in that** translational movement halting means (11; 11'; 16) are provided to, in the thrust-reversal situation, act on a rear part (8b) of the flap (8), downstream of its central axis (9) of articulation, so as to cause the flap (8) to pivot into its deployed position to block off the fan duct (5).

2. Thrust reverser according to Claim 1,
**characterized in that** mechanical or elastic means (10) are provided to, in the direct-thrust situation, return the flap (8) to its retracted position.

3. Thrust reverser according to Claim 1 or 2,
**characterized in that** the larger-diameter annular part of the inner skin (2) of the fan duct (5) comprises a stop member (11, 11'), preferably of an aerodynamic shape, and capable, in the thrust-reversal situation, of butting against the rear part (8b) of the flap (8) and of causing the latter to pivot into its deployed position.

4. Thrust reverser according to Claim 3,
**characterized in that** the stop member (11) has a surface (13) for sliding or rolling contact with the rear part (8b) of the flap (8).

5. Thrust reverser according to Claim 3 or 4,
**characterized in that** the stop member (11') has an opening (15) which, depending on whether it is directed upstream or downstream, forms either an engine cooling air intake or an engine air outlet.

6. Thrust reverser according to any one of Claims 1 to 5, **characterized in that** the cowling (1) has a stop element (14) designed to, in the direct-thrust situation, act as an obstacle to the movement of the rear part (8b) of the flap (8) and immobilize the flap (8) in the retracted position.

7. Thrust reverser according to Claim 6,
**characterized in that** the stop member (14) has a surface for sliding or rolling contact with the rear part (8b) of the flap (8).

8. Thrust reverser according to Claim 1 or 2,
**characterized in that** the rear part (8b) of the flap (8) is articulated to a first end of at least one link rod (16) of which a second end is mounted to slide upstream to downstream in a slideway that has a downstream translational movement halting end designed to, during thrust reversal, immobilize the second end of the link rod (16) so that, at the end of the travel of the sliding cowl (7) in the downstream direction, the flap (8) pivots into the deployed position.

9. Thrust reverser according to Claim 1 or 2,
**characterized in that** the rear part (8b) of the flap (8) is articulated to a first end of at least one telescopic link rod with slider, which link rod is articulated by a second end to a fixed structure (4) upstream of the reverser (3), and **in that** the length of said link rod with slider in its maximum extension is determined such that, at the end of the travel of the sliding cowl (7) in the downstream direction, the flap (8) pivots into the deployed position.

10. Thrust reverser according to Claim 9,
**characterized in that** the link rod (16) is mounted articulated about a fixed point situated downstream of the cascade vanes (6).

11. Thrust reverser according to Claim 1 or 2,
**characterized in that** the rear part (8b) of the flap (8) has a pivot element able to collaborate during translational movement of the moving cowl with a ramp mounted fixedly on a rear surround (17) of the cascade vanes (6) so as to cause said flap to pivot as the moving cowl retreats.

12. Jet engine nacelle comprising a cascade-type thrust reverser according to any one of Claims 1 to 9.

## Patentansprüche

1. Schubumkehrer (3) mit Gittern (6) für ein Strahltriebwerk, der eine Triebwerksverkleidung (1) enthält, in der eine Öffnung ausgespart ist, die bei einem direkten Schub der Gase von einer gleitenden Abdeckung (7) verschlossen wird, und die bei einer Schubumkehr durch Translationsverschiebung der gleitenden Abdeckung (7) nach hinten bezüglich der Strömungsrichtung der Gase freigelegt wird, wobei ein Gebläsekanal (5) zwischen einer Innenhaut (2) und einer Außenhaut definiert wird, in die sich die Innenhaut der gleitenden Abdeckung (7) bei einem direkten Schub integriert, wobei die Innenhaut der gleitenden Abdeckung (7) einen ringförmigen Bereich aufweist, der sich radial nach innen erstreckt und bei einer Schubumkehr vor einen ringförmigen Bereich größeren Durchmessers der Innenhaut (2) des Gebläsekanals (5) kommen kann,
**dadurch gekennzeichnet, dass** der ringförmige Bereich der Innenhaut der gleitenden Abdeckung (7) mindestens eine Klappe (8) aufweist, die um eine um Wesentlichen mittlere Gelenkachse (9) zwischen einer in die Innenhaut der gleitenden Abdeckung (7) zurückgezogenen Stellung und einer ausgefahrenen Stellung schwenkbar montiert ist, in der ein vorderer Bereich (8a) der Klappe (8) vor ihrer mittleren Gelenkachse (9) in den Gebläsekanal vorsteht, und dass Einrichtungen zum Anhalten der Translationsbewegung (11; 11'; 16) vorgesehen sind, um bei einer Schubumkehr auf einen hinteren Bereich (8b) der Klappe (8) hinter ihrer mittleren Gelenkachse (9) einzuwirken, um die Klappe (8) in die ausgefahrene Stellung schwenken zu lassen, um den Gebläsekanal (5) zu verschließen.

2. Schubumkehrer nach Anspruch 1, **dadurch gekennzeichnet, dass** mechanische oder elastische Einrichtungen (10) vorgesehen sind, um bei einem direkten Schub die Klappe (8) in die zurückgezogene Stellung zurückzuholen.

3. Schubumkehrer nach Anspruch 1 oder 2, **dadurch gekennzeichnet, dass** der ringförmige Bereich größeren Durchmessers der Innenhaut (2) des Gebläsekanals (5) ein Anschlagorgan (11, 11') vorzugsweise von aerodynamischer Form aufweist, das bei einer Schubumkehr gegen den hinteren Bereich (8b) der Klappe (8) in Anschlag kommen und letztere in die ausgefahrene Stellung kippen lassen kann.

4. Schubumkehrer nach Anspruch 3, **dadurch gekennzeichnet, dass** das Anschlagorgan (11) eine gleitende oder rollende Kontaktfläche (13) mit dem hinteren Bereich (8b) der Klappe (8) aufweist.

5. Schubumkehrer nach Anspruch 3 oder 4, **dadurch gekennzeichnet, dass** das Anschlagorgan (11') eine Öffnung (15) aufweist, die je nach ihrer Ausrichtung nach vorne oder nach hinten einen Kühllufteinlass für den Motor oder einen Luftauslass des Motors bildet.

6. Schubumkehrer nach einem der Ansprüche 1 bis 5, **dadurch gekennzeichnet, dass** die Triebwerksverkleidung (1) ein Anschlagelement (14) besitzt, das vorgesehen ist, um bei einem direkten Schub ein Hindernis für die Bewegung des hinteren Bereichs (8b) der Klappe (8) zu bilden und die Klappe (8) in der eingezogenen Stellung zu blockieren.

7. Schubumkehrer nach Anspruch 6, **dadurch gekennzeichnet, dass** das Anschlagelement (14) eine gleitende oder rollende Kontaktfläche mit dem hinteren Bereich (8b) der Klappe (8) aufweist.

8. Schubumkehrer nach Anspruch 1 oder 2, **dadurch gekennzeichnet, dass** der hintere Bereich (8b) der Klappe (8) an ein erstes Ende mindestens einer Schubstange (16) angelenkt ist, von der ein zweites Ende von vorne nach hinten in einer Gleitschiene gleitend montiert ist, die ein hinteres Ende zum Stoppen der Translationsbewegung aufweist, das vorgesehen ist, um während der Schubumkehr das zweite Ende der Schubstange (16) zu blockieren, damit am Ende des Hubs der gleitenden Abdeckung (7) nach hinten die Klappe (8) in die ausgefahrene Stellung kippt.

9. Schubumkehrer nach Anspruch 1 oder 2, **dadurch gekennzeichnet, dass** der hintere Bereich (8b) der Klappe (8) an ein erstes Ende mindestens einer Schubstange mit Teleskop-Gleitstück angelenkt ist, die über ein zweites Ende an einer ortsfesten Struktur (4) vor dem Schubumkehrer (3) angelenkt ist, und dass die Länge bei maximalem Ausziehen der Schubstange mit Gleitstück so bestimmt ist, dass am Ende des Hubs der gleitenden Abdeckung (7) nach hinten die Klappe (8) in die ausgefahrene Stellung kippt.

10. Schubumkehrer nach Anspruch 9, **dadurch gekennzeichnet, dass** die Schubstange (16) um einen ortsfesten Punkt hinter den Gittern (6) angelenkt ist.

11. Schubumkehrer nach Anspruch 1 oder 2, **dadurch gekennzeichnet, dass** der hintere Bereich (8b) der Klappe (8) ein Schwenkelement aufweist, das bei der Translationsbewegung der beweglichen Abdeckung mit einer Rampe zusammenwirken kann, die ortsfest auf einen hinteren Rahmen (17) der Gitter (6) montiert ist, um das Kippen der Klappe beim Zurückweichen der beweglichen Abdeckung zu bewirken.

12. Strahltriebwerksgondel, die einen Schubumkehrer mit Gittern nach einem der Ansprüche 1 bis 9 aufweist.
